# EUROPÄISCHE PATENTSCHRIFT

(11) **EP 1 068 743 B1**
(45) Veröffentlichungstag und Bekanntmachung des Hinweises auf die Patenterteilung: **27.11.2002**
(21) Anmeldenummer: 99924658.0
(22) Anmeldetag: 22.03.1999
(51) Int. Cl.: H04Q 3/00, H04Q 7/24

(54) **VERFAHREN UND DIENSTEVERMITTLUNGSEINHEIT ZUR ANFORDERUNG VON INFORMATIONEN BEI ANKOMMENDEN, AN EINEN TEILNEHMER EINES KOMMUNIKATIONSNETZES GERICHTETEN ANRUFEN**
METHOD AND SERVICE NETWORK UNIT FOR REQUESTING INFORMATION DURING INCOMING CALLS TO A SUBSCRIBER OF A COMMUNICATIONS NETWORK
PROCEDE ET UNITE DE FOURNITURE DE SERVICES DESTINES A LA DEMANDE D'INFORMATIONS EN CAS D'APPELS ENTRANTS ADRESSES A UN ABONNE D'UN RESEAU DE COMMUNICATION

(30) Priorität: 30.03.1998 DE 19814162
(43) Veröffentlichungstag der Anmeldung: 17.01.2001
(73) Patentinhaber: SIEMENS AKTIENGESELLSCHAFT, 80333 München (DE)
(72) Erfinder: BECHER, Reinhard, D-81245 München (DE)
(86) Internationale Anmeldenummer: DE9900817
(87) Internationale Veröffentlichungsnummer: WO99051040

(56) Entgegenhaltungen:
- WO-A-96/13949
- WO-A-96/34502
- WO-A-97/31491
- WO-A-97/48245
- HLAVACEK D M ET AL: "ALTERNATIVE METHODS FOR INTRODUCING NEW WIRELESS INTELLIGENT NETWORK SERVICES USING TRIGGERS AND QUERIES" BELL LABS TECHNICAL JOURNAL, Bd. 2, Nr. 3, 21. Juni 1997 (1997-06-21), Seiten 20-29, XP000703738 ISSN: 1089-7089
- BECHER R ET AL: "CAMEL: THE IMPACT OF PERSONAL COMMUNICATIONS ON INTELLIGENT NETWORKS" ISS '97. WORLD TELECOMMUNICATIONS CONGRESS. (INTERNATIONAL SWITCHIN SYMPOSIUM), GLOBAL NETWORK EVOLUTION: CONVERGENCE OR COLLISION? TORONTO, SEPT. 21 - 26, 1997, Bd. 2, 21. September 1997 (1997-09-21), Seiten 225-233, XP000704472 ABDALLAH ABI-AAD ET AL

## Beschreibung

Die Erfindung betrifft ein Verfahren und eine Dienstevermittlungseinheit zur Anforderung von Informationen bei ankommenden Anrufen, die an einen Teilnehmer eines Kommunikationsnetzes gerichtet sind.

Kommunikationsnetze sind beispielsweise als Festnetze oder Funknetze - wie das bekannte GSM-Mobilfunknetz (Global System for Mobile Communications) - ausgebildet und weisen untereinander vernetzte Vermittlungseinrichtungen auf. In Mobilfunknetzen sind an die Vermittlungseinrichtungen jeweils Basisstationen angeschlossen, mit deren Hilfe über eine Luftschnittstelle Kommunikationsendgeräte anschließbar sind. Diese Kommunikationsendgeräte ermöglichen einem Funkteilnehmer des Funknetzes den Netzzugang. Die Vermittlungseinrichtungen können darüber hinaus den Übergang zu weiteren Netzen, z.B. Datenübertragungsnetzen oder einem Festnetz, bewirken.

Aus dem GSM-Mobilfunknetz ist es weiterhin bekannt, Teilnehmerdatenbasen als Speichereinheiten, in denen jeweils teilnehmerspezifische Daten - z.B. zu den für den Teilnehmer registrierten Diensten - gespeichert sind, zu verwenden Eine dieser Speichereinheiten realisiert das sogenannte Heimatregister, das sich in der Regel an einem fest definierten Ort befindet und in dem die der Registrierung des Teilnehmers zugrundeliegenden Daten abgelegt sind. Abhängig vom momentanen Aufenthaltsort des mobilen Teilnehmers ist eine Speichereinheit als sogenanntes Besucherregister vorgesehen. Je nach Aufenthaltsort des mobilen Teilnehmers ändert sich auch die Speichereinheit für das Besucherregister, in dem sich die für diesen Teilnehmer spezifischen Daten befinden.

Es ist allgemein bekannt, zusätzliche Dienste für die Teilnehmer eines Kommunikationsnetzes - ob Festnetz oder Mobilfunknetz - durch die Struktur eines Intelligenten Netzes (IN) mit Dienstesteuerungseinheiten (service control point) zu unterstützen. Diese Dienstesteuerungseinheiten und die darin abgelegten Profile der zusätzlichen Dienste, einschließlich der zu ihrer Realisierung notwendigen Informationen, sind damit unabhängig vom jeweiligen Kommunikationsnetz änderbar. Dabei werden die in einem Intelligenten Netz nutzbaren Dienste in einer Dienstevermittlungseinheit (service switching point) angestoßen, um einen Ausstieg aus der üblichen Anrufverarbeitung zu bewirken und den Zugriff zu den zusätzlichen Diensten zu aktivieren. Aus "The CAMEL feature, proposed revisions to the stage 1 description", von ETSI/STC /SMG1. 14.03.95, GSM 02.78, Version 0.4.0, Seiten 1-14, ist eine CAMEL (Customized Application for Mobil network Enhanced Logic) Plattform bekannt, mit der die Unterstützung von zusätzlichen anbieterspezifischen Diensten für Teilnehmer ermöglicht werden soll, z.B. auch dann, wenn sie sich im Ausland aufhalten. Damit kann über Netz- und Dienstegrenzen eines Kommunikationsnetzes hinweg ein betreiberspezifischer zusätzlicher Dienst genutzt werden. Dies ist der Fall, wenn die den zusätzlichen Dienst anstoßende Dienstevermittlungseinheit für den angeforderten Dienst die benötigte CAP-Signalisierung (CAMEL Application Part) verarbeiten kann und über die Netzgrenzen hinweg Signalisierungsinformationen von und zum Heimatregister und zur Dienstesteuerungseinheit des zusätzlichen Dienstes ausgetauscht werden können.

Beim Aufbau der Anrufverbindung erfolgt von der für den ankommenden Anruf zuständigen Vermittlungseinrichtung eine zweistufige Aufenthaltsabfrage (Interrogation). Dabei sendet sie in der ersten Stufe eine Anfrage zunächst an das Heimatregister, um bei Eintragung einer IN/CAMEL-Subskription für den Teilnehmer einen Dialog mit einer Dienstesteuerungseinheit zu veranlassen. In der zweiten Stufe bezweckt eine weitere Anfrage an das Heimatregister, daß dieses Heimatregister eine Mobilitätsnummer (Mobil Subscriber Roaming Number) von einer den angerufenen Funkteilnehmer aktuell bedienenden Vermittlungseinrichtung anfordert und an die für den ankommenden Anruf zuständige Vermittlungseinrichtung übermittelt. Dabei besteht auch die Möglichkeit, daß die Dienstesteuerungseinheit Informationen - z.B. Parameter zur Anrufvergebührung - übermittelt, jedoch nur einmalig im Rahmen dieser zweistufigen Anfrageprozedur. Ein Zugriff auf Daten und Parameter der Dienstesteuerungseinheit zu einem späteren Zeitpunkt ist unmöglich. Dies bedeutet, daß jede neue Information für den angerufenen Teilnehmer im Einzelfall neu zu standardisieren ist und ein entsprechendes Übertragungsmedium - z.B. ein neuer Nachrichtencontainer - zur Verfügung zu stellen ist. Darüber hinaus können nur die Informationen, die zum Zeitpunkt des Verbindungsaufbaus mit der Abfrage der Dienstesteuerungseinheit zur Verfügung stehen, übermittelt werden.

Aus der WO 96/13949 ist bereits ein Verfahren bekannt, bei dem in der Dienstevermittlungseinheit Trigger und Triggerkriterien, welche für Anfragen an die Dienstesteuerungseinheit benötigt werden, gespeichert werden. Diese Trigger sind vordefiniert.

Aus dem Artikel "Alternative Methods for Introducing New Wireless Intelligent Network Services Using Trigger and Queries", Hlavacek D. et al, Bell Labs Technical Journal, Bd. 2, Nr. 3, S. 20-29, ist bekannt bei ankommenden Anrufen, ausgehend von einer Rufnummer, eine Anfrage an die Dienstesteuerungseinheit vorzunehmen bezüglich einer dort hinterlegten Zuordnung von Rufnummer zu Namen des Anrufenden, der dann zusammen mit dem Anruf an ein mobiles Kommunikationsendgerät weitergeleitet und dort auf einem Display angezeigt wird.

Aus dem Artikel "Camel: The Impact of Personal Communications on Intelligent Networks", Becker R. et al., ISS '97 World Telecommunications Congress, Global Network Evolution, Toronto, Sept. 21-26, 1997, Bd. 2, S. 225-233, ist es bekannt eine Korrelationsfunktion vorzusehen, mit deren Hilfe von der Dienstesteuerungseinheit angeforderte Informationen einem Anruf zugeordnet werden können.

Aus der WO 97/31491 ist ferner bekannt, dass in der Dienstevermittlungseinheit ein ankommender Anruf hinsichtlich vordefinierter interner Triggerbedingungen geprüft wird und gegebenenfalls ein Dienst bei der Dienstesteuerungseinheit angefordert wird.

Der Erfindung liegt die Aufgabe zugrunde, ein Verfahren sowie eine Dienstevermittlungseinheit anzugeben, durch das bzw. die die Informationsübertragung zwischen der Dienstevermittlungseinheit und der Dienstesteuerungseinheit bei ankommenden Anrufe verbessert und flexibler gestaltet werden kann.

Diese Aufgabe wird gemäß der Erfindung hinsichtlich des Verfahrens durch die Merkmale des Patentanspruchs 1 und hinsichtlich der Dienstesteuerungseinheit durch die Merkmale des Patentanspruchs 13 gelöst. Vorteilhafte Weiterbildungen sind den Unteransprüchen zu entnehmen.

Das erfindungsgemäße Verfahren zur Informationsübertragung sieht vor, daß von der Teilnehmerdatenbasis eine Triggerinformation zu der für den Teilnehmer aktuell zuständigen Dienstevermittlungseinheit gesendet und mit ihr ein Triggerereignis in der Dienstevermittlungseinheit gespeichert wird. Bei Vorliegen des Triggerereignisses werden die Informationen von einer Dienstesteuerungseinheit durch die Dienstevermittlungseinheit direkt angefordert. Auf diese Weise können Informationen sowohl während des Verbindungsaufbau als auch während einer bereits bestehenden Verbindung von der Dienstesteuerungseinheit abgerufen und dem Teilnehmer bzw. seinem Kommunikationsendgerät zur Verfügung gestellt werden. Die direkte Anforderung von Informationen über ein vorgebbares Triggerereignis ist durch die Erfindung jederzeit möglich. Daten und Parameter können durch die Erfindung zwischen Dienstesteuerungseinheit und Dienstevermittlungseinheit bzw. der den angerufenen Teilnehmer bedienenden Vermittlungseinrichtung (Visited MSC) und/oder dem Kommunikationsendgerät übertragen werden, ohne daß hierfür Nachrichten zwischen der Zugangs-Vermittlungseinrichtung (Gateway MSC), den Teilnehmerdatenbasen und der Dienstevermittlungseinheit geändert werden müssen. Dies ist ein erheblicher Gewinn hinsichtlich Signalisierungsaufkommen und Flexibilität der Informationsübertragung, insbesondere bei neuen Informationen. Eine jeweilige Anpassung der standardisierten Übertragungsverfahren für Informationen, die heute noch unbekannt oder noch nicht anwendungsreif sind, ist nicht erforderlich. Ein optimiertes Interworking zwischen der Dienstesteuerungseinheit und dem Kommunikationsendgerät - entweder direkt oder via Dienstevermittlungseinheit - auch während des Verbindungsaufbaus oder während der Verbindung ist die Folge.

Gemäß einer Weiterbildung der Erfindung wird mit der Triggerinformation eine Adresse der Dienstesteuerungseinheit, von der die Informationen anzufordern sind, in der Dienstevermittlungseinheit gespeichert.

Gemäß einer günstigen Weiterbildung der Erfindung werden die Triggerinformation auf Grund einer Anfrage der **Vermittlungseinrichtung, die den ankommenden Anruf empfängt, von der Teilnehmerdatenbasis sowie ein Indikator** für die direkt anzufordernden Informationen auf Grund **einer** initiierenden Nachricht der **Vermittlungseinrichtung** von der Dienstesteuerungseinheit übersandt. Anschließend werden die beiden Informationen gemeinsam von der **Vermittlungseinrichtung via Teilnehmerdatenbasis in einer Anforderung zur Übermittlung einer den** **Aufenthaltsort des Teilnehmers kennzeichnenden Mobilitätsnummer zur** Dienstevermittlungseinheit gesendet. Damit gelangen die Informationen, die das getriggerte Anfordern von Informationen bewirken, unter Verwendung der zweistufigen Anfrage (Interrogation) in die Dienstevermittlungseinheit.

Gemäß einer dazu alternativen vorteilhaften Weiterbildung der Erfindung wird die Triggerinformation von der Teilnehmerdatenbasis in einer Nachricht, die zur Aktualisierung des Aufenthaltsorts des Teilnehmers benutzt wird, zur Dienstevermittlungseinheit gesendet. Damit kann das getriggerte Anfordern von Informationen auch auf direktem Weg durch Ausnutzung einer im Netz vorhandenen Aktualisierungsprozedur initiiert werden. Diese Vorgehensweise ist besonders aufwandsarm hinsichtlich des Signalisierungsverkehrs.

Eine andere Weiterbildung der Erfindung sieht vor, daß von der Dienstesteuerungseinheit sowie der Dienstevermittlungseinheit eine Korrelationsinformation benutzt wird, anhand der die von der Dienstesteuerungseinheit direkt angeforderten Informationen dem jeweiligen Anruf zugeordnet werden. Damit ist gewährleistet, daß auch bei mehreren getriggerten Anforderungen eine sichere Zuordnung der bereitgestellten Informationen zur dem jeweiligen Anruf existiert.

Eine besondere Variante der Erfindung sieht vor, daß die Dienstevermittlungseinheit bei erfülltem Triggerereignis die Informationen - vorzugsweise via Dienstesteuerungseinheit - von einer Internet-Diensteeinheit (Web-Server) anfordert, empfängt und an das Kommunikationsendgerät **sendet**. Damit können von anderen Diensteeinheiten- z.B. Web-Server - deren Informationen wie z.B. gespeicherte eMails, Werbung und dergleichen dem Teilnehmer bzw. dessen Kommunikationsendgerät direkt übermittelt werden.

Die Dienstevermittlungseinheit gemäß dem Gegenstand der Erfindung weist eine Speichereinrichtung zum Speichern des Triggerereignisses auf Grund der von der Teilnehmerdatenbasis übersandten Triggerinformation, und eine Steuereinrichtung zum Erzeugen einer Nachricht, die bei Vorliegen des Triggerereignisses zur Anforderung von Informationen direkt an die Dienstesteuerungseinheit gesendet wird.

Anhand von zeichnerischen Darstellungen wird der Erfindungsgegenstand im folgenden näher erläutert. Im einzelnen zeigen
- FIG 1: das Blockschaltbild eines Kommunikationsnetzes, und
- FIG 2-4: eine schematische Darstellung der am erfindungsgemäßen Verfahren beteiligten Einrichtungen mit dem entsprechenden Nachrichtenfluß für verschiedene Fälle der Informationsübertragung.

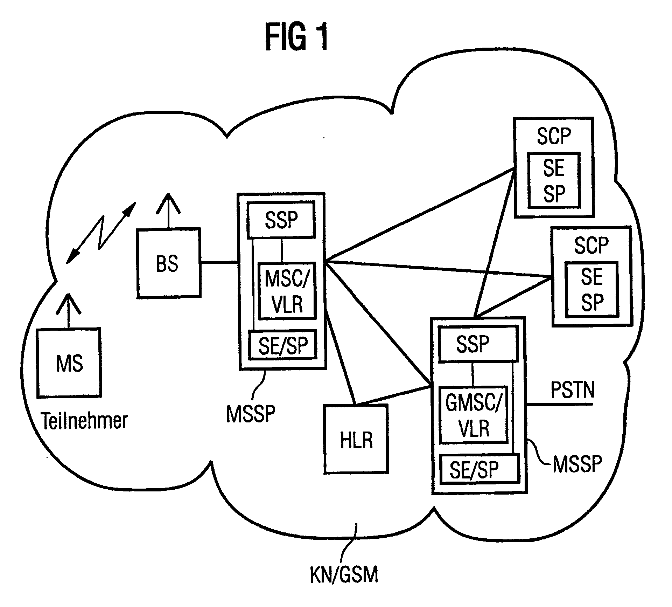

FIG 1 zeigt als Kommunikationsnetz ein nach dem GSM-Standard betriebenes Mobilfunknetz, an dem das Verfahren gemäß der Erfindung erläutert wird. Die Erfindung ist nicht auf mobile Netze mit GSM-Technik beschränkt, sondern kann ebenso in anderen Netzen und mit anderen Zugriffstechiken angewendet werden. Das Kommunikationsnetz KN weist üblicherweise mehrere Vermittlungseinrichtungen MSC/VLR auf, die miteinander verbunden sind. Eine Vermittlungseinrichtung MSC/VLR stellt die Verbindung zu einem Teilnehmer über eine Basisstation BS, die an die Vermittlungseinrichtung VLR/MSC leitungsgebunden angeschlossen ist, und über eine Luftschnittstelle zwischen Basisstation BS und einer Mobilstation MS her. Die Mobilstation MS ist das Kommunikationsendgerät eines A-Teilnehmers, der abgehende Anrufe (MOC, Mobile Originated Call) initiiert oder eines B-Teilnehmers, der ankommende Anrufe (MTC, Mobile Terminated Call) empfängt. Eine weitere Vermittlungseinrichtung GMSC/VLR bildet den Netzübergang in ein weiteres Netz, z.B. einem Festnetz PSTN.

Weiterhin weist das Kommunikationsnetz KN Dienstesteuerungseinheiten SCP (werden nach CAMEL Phase 1 auch als CSE - CAMEL Service Environment) bezeichnet) und Dienstevermittlungseinheiten SSP zur Unterstützung der Netzstruktur eines Intelligenten Netzes auf. Dabei bildet jeweils eine Dienstevermittlungseinheit SSP mit der Vermittlungseinrichtung MSC/ VLR bzw. mit der Vermittlungseinrichtung GMSC/VLR eine Dienstevermittlungseinheit MSSP, die an der Schnittstelle zwischen Kommunikationsnetz KN und Intelligentem Netz wirkt. Bei diesen Verbindungen ist es nicht notwendig, daß jede Dienstesteuerungseinheit SCP mit jeder Vermittlungseinrichtung MSC/VLR bzw. GMSC/VLR oder mit jeder Dienstevermittlungseinheit MSSP direkt verbunden ist - wie im Blockschaltbild dargestellt. Es genügt, wenn diese über das Kommunikationsnetz KN odere andere Netze mittels einer Nr.7-Signalisierung erreichbar sind. Im vorliegenden Beispiel befinden sich zwei Dienstesteuerungseinheiten SCP im Kommunikationsnetz KN und sind mit beiden Dienstevermittlungseinheiten SSP über eine INAP-Signalisierung (Intelligent Network Application Part) oder über eine CAP-Signalisierung (CAMEL Application Part) direkt verbunden. Auch die Nutzung der MAP-Signalisierung (Mobile Application Part) zum Austausch von Informationen zwischen den Einrichtungen des Mobilfunknetzes GSM ist möglich. Nach FIG 1 ist eine Teilnehmerdatenbasis HLR als Heimatregister des Teilnehmers A, B als eigenständige Speichereinheit im Kommunikationsnetz KN angeordnet, die mit den beispielhaft dargestellten Vermittlungseinrichtungen MSC/VLR, GMSC/VLR verbunden ist. Beide Vermittlungseinrichtungen VLR/MSC, GMSC/VLR enthalten auch eine Teilnehmerdatenbasis, das Besucherregister VLR, das Teilnehmerdaten des Teilnehmers A, B speichert, solange sich der mobile Teilnehmer im Einzugsbereich der jeweiligen Vermittlungseinrichtung aufhält. Sowohl die Dienstesteuerungseinheiten SCP als auch die Dienstevermittlungseinheiten MSSP verfügen jeweils über eine Speichereinrichtung SP und eine Steuereinrichtung SE.

An den Funkteilnehmer B gerichtete ankommende Anrufe, beispielsweise aus dem Festnetz PSTN, erreichen die Vermittlungseinrichtung GMSC/VLR am Netzübergang, die auf Grund der eintreffenden Mobilteilnehmerrufnummer (MSISDN) den Verbindungsaufbau initiiert und bearbeitet. Auf Grund einer Anfrage (Interrogation) der Vermittlungseinrichtung GMSC/VLR liefert das Heimatregister HLR eine Triggerinformation und sendet sie zu der für den Teilnehmer aktuell zuständigen Dienstevermittlungseinheit MSSP. Mit der Triggerinformation wird ein Triggerereignis in der Dienstevermittlungseinheit gespeichert, sodaß bei Vorliegen des Triggerereignisses Daten und Parameter von einer Dienstesteuerungseinheit SCP durch die Dienstevermittlungseinheit MSSP direkt angefordert werden. Bei der erfindungsgemäßen Triggerung der Anforderung wird vorzugsweise auch die Dienstesteuerungseinheit SCP, die die Informationen bereitstellen soll, anhand einer in der Triggerinformation enthaltenen SCP-Adresse ausgewählt. Auf diese Weise können Informationen sowohl während des Verbindungsaufbaus als auch während einer bereits bestehenden Verbindung von der Dienstesteuerungseinheit abgerufen und dem Teilnehmer B bzw. seinem Kommunikationsendgerät MS zur Verfügung gestellt werden. Die Anforderung von Informationen über ein vorgebbares Triggerereignis ist im Prinzip jederzeit möglich und nicht auf das einmalige Abrufen vor dem Verbindungsaufbau beschränkt. Dies ist ein erheblicher Gewinn hinsichtlich Signalisierungsaufkommen und Flexibilität der Informationsübertragung, insbesondere bei neuen Informationen.

Gemäß einer alternativen Vorgehensweise kann die Triggerinformation mit dem Triggerereignis und der SCP-Adresse von der Teilnehmerdatenbasis HLR in einer Nachricht ("location update") zur Aktualisierung des Aufenthaltsorts des Teilnehmers an die Dienstevermittlungseinheit MSSP gesendet und dort gespeichert werden. Damit kann das erfindungsgemäße Triggern der Anforderung von Informationen auch auf direktem Weg durch Ausnutzung der im Netz vorhandenen und benutzten "location update"-Prozedur initiiert werden. Diese Art der Triggerung ist besonders aufwandsarm hinsichtlich des Signalisierungsverkehrs.

Jede Dienstevermittlungseinheit MSSP weist zur Anforderung der Informationen gemäß der Erfindung die Speichereinrichtung SP zum Speichern des Triggerereignisses auf Grund der von der Teilnehmerdatenbasis HLR übersandten Triggerinformation und die Steuereinrichtung SE zum Erzeugen einer Anforderung, die bei Vorliegen des Triggerereignisses zur Übermittlung von Informationen direkt an die adressierte Dienstesteuerungseinheit SCP gesendet wird, auf.

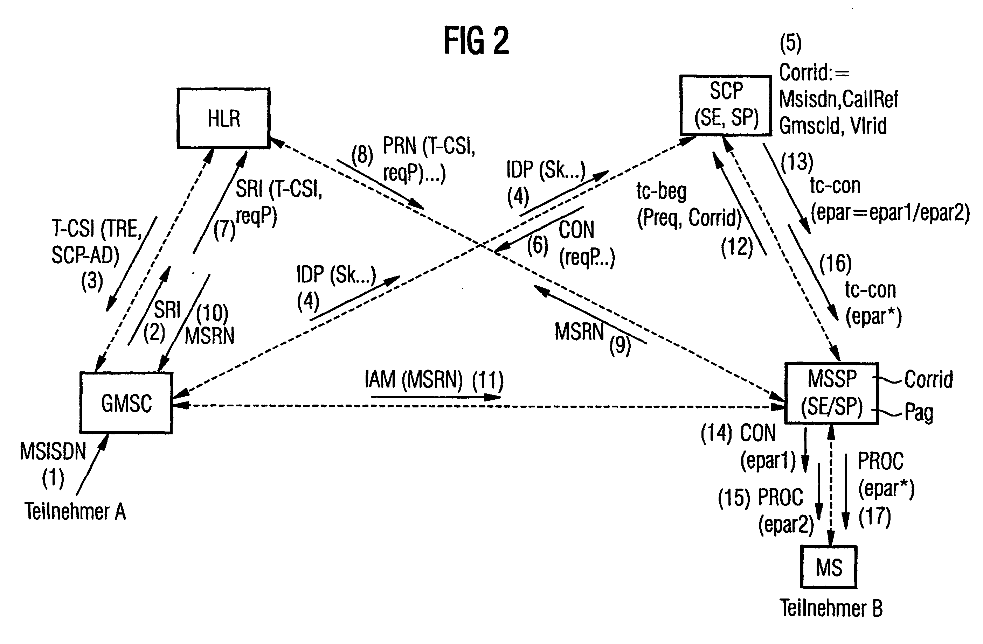

Fig 2 zeigt den Nachrichtenfluß zwischen den am Verbindungsaufbau beteiligten Einrichtungen. Dies sind die Vermittlungseinrichtung GMSC, das Heimatregister HLR, die Dienstesteuerungseinheit SCP - mit Speichereinrichtung SP und Steuereinrichtung SE - , die Dienstevermittlungseinheit MSSP - mit Speichereinrichtung SP und Steuereinrichtung SE - und das Kommunikationsendgerät MS. Der den Anruf initiierende Teilnehmer A wählt - beispielsweise im Festnetz - die Mobilteilnehmerrufnummer MSISDN des Funkteilnehmers B, die von der Vermittlungseinrichtung GMSC des Mobilfunknetzes am Netzübergang empfangen wird (1). Daraufhin richtet die Vermittlungseinrichtung GMSC eine Anfrage SRI (Send Routing Info) an das Heimatregister HLR (2), das für den Funkteilnehmer eine Triggerinformation T-CSI (Trigger-CAMEL Subscription Identity) gespeichert hat. Die Triggerinformation T-CSI definiert ein Triggerereignis TRE und eine Adresse SCP-AD der Dienstesteuerungseinheit SCP, von der die Informationen bei Vorliegen des Triggerereignisses TRE durch die Dienstevermittlungseinheit MSSP - mit der für den Teilnehmer B aktuell zuständigen Vermittlungseinrichtung - angefordert werden können. Daher sendet das Heimatregister HLR die Triggerinformation T-CSI zur anfragenden Vermittlungseinrichtung GMSC zurück (3).

Die Vermittlungseinrichtung GMSC sendet daraufhin eine initiierende Nachricht IDP (Initial Detection Point) mit einigen Parametern - z.B. Diensteschlüssel Sk (Service Key), Mobilteilnehmerrufnummer Msisdn, eine Kennung GmscId der Vermittlungseinrichtung GMSC sowie eine Kennung VlrId des Besucherregisters und eine Anrufkennung CallRef zur Dienstesteuerungseinheit SCP (4). Dabei erfolgt die Signalisierung transaktionsbezogen beispielsweise über das CAP-Protokoll.

Die Speichereinrichtung SP der Dienstesteuerungseinheit SCP speichert die eintreffenden Parameter und generiert aus den Parametern Msisdn, GmscId, VlrId, CallRef eine Korrelationsinformation CorrId (5). Diese Korrelationsinformation CorrId wird von der Dienstesteuerungseinheit SCP wie von der Dienstevermittlungseinheit MSSP benutzt, um die von der Dienstesteuerungseinheit SCP direkt angeforderten Informationen dem jeweiligen Anruf zuzuordnen. Die Dienstesteuerungseinheit SCP sendet als Antwort auf die initiierende Nachricht IDP eine Nachricht CON (Connect) mit einem Indikator reqP (request Parameter) zur Vermittlungseinrichtung GMSC zurück (6). Der Indikator reqP zeigt an, daß von der adressierten Dienstesteuerungseinheit SCP die Informationen abhängig von der Triggerung der Anforderung zu einem späteren Zeitpunkt - z.B. auch während einer bestehenden Verbindung - abrufbar sind.

Die Vermittlungseinrichtung GMSC erzeugt eine zweite Anfrage SRI an das Heimatregister HLR (7), wobei in der Anfrage SRI die Triggerinformation T-CSI und der Indikator reqP enthalten sind. Das Heimatregister HLR fügt die Triggerinformation T-CSI und den Indikator reqP in eine Anforderung PRN (Provide Roaming Number) zur Übermittlung einer den Aufenthaltsort des Teilnehmers B kennzeichnenden Mobilitätsnummer ein und sendet sie zur Dienstevermittlungseinheit MSSP mit der den Teilnehmer B bedienenden Vermittlungseinrichtung aus (8). Aus der Speichereinrichtung SP der Dienstevermittlungseinheit MSSP wird die Mobilitätsnummer MSRN (Mobile Subscriber Roaming Number) ausgelesen und zum anfordernden Heimatregister HLR rückgesendet (9). Die Dienstevermittlungseinheit MSSP speichert auch die Korrelationsinformation CorrId, um einen eindeutigen Bezug zum jeweiligen Anruf bei der getriggerten Anforderung der Informationen zwischen Dienstevermittlungseinheit MSSP und Dienstesteuerungseinheit SCP zu haben. Die Korrelationsinformation CorrId wird vorzugsweise direkt von der Dienstesteuerungseinheit SCP zur Dienstevermittlungseinheit MSSP gesendet und in die Speichereinrichtung SP eingetragen. Das Heimatregister HLR sendet die empfangene Mobilitätsnummer MSRN zur Vermittlungseinrichtung GMSC (10), die daraufhin eine Verbindungsaufbaunachricht IAM (Initial Address Message) generiert und in dieser Nachricht IAM die übermittelte Mobilitätsnummer MSRN zu der für den Teilnehmer B zuständigen Vermittlungseinrichtung in der Dienstevermittlungseinheit MSSP sendet (11).

Der Verbindungaufbau wird fortgesetzt, indem zunächst ein Funkruf Pag(Paging) über die Basisstation(en) in die Funkzelle(n) des von der Vermittlungseinrichtung in der Dienstevermittlungseinheit MSSP betreuten Aufenthaltsgebiets gesendet (9) und von dem Kommunikationsendgerät MS des Teilnehmers B mit einer Nachricht bestätigt wird. Parallel zum Paging oder danach initiiert die Steuereinrichtung SE der Dienstevermittlungseinheit MSSP, sobald das zuvor eingestellte Triggerereignis eingetreten ist, eine Anforderung tc-beg (begin), mit der Daten und/oder die Parameter direkt von der Dienstesteuerungseinheit SCP abgerufen werden (12). Die an die Dienstesteuerungseinheit SCP gerichtete Anforderung tc-beg enthält die Korrelationsinformation CorrId sowie eine Parameterinformation Preq (Parameter request), welche Informationen gewünscht sind. Im dargestellten Beispiel handelt es sich um Parameter zur Berechnung der Anrufgebühren. Weitere Daten oder Parameter, die vorzugsweise an das Kommunikationsendgerät MS in Echtzeit weitergeleitet werden, können beispielsweise ein spezieller Anrufton (ringing tone), ein Warnton - zur Signalisierung einer on-line Vergebührung oder einer bestimmten Zone (Heimatzone) bei Anwendung einer zonenabhängigen Vergebührung - , eine Handoverentscheidung, eine Änderung des momentan genutzten Dienstes usw. Sein.

Die Steuereinrichtung SE der Dienstesteuerungseinheit SCP erzeugt eine Nachricht tc-con (continue), in die sie für den Fall der Anrufvergebührung einen Satz von mehreren Gebührenparametern epar einfügt und als Antwort auf die Anforderung tc-beg zur Dienstevermittlungseinheit MSSP zurücksendet (13). Dabei umfasst der Parametersatz epar erste Parameter epar1, die vor einer Tarifumschaltung Gültigkeit haben, sowie zweite Parameter epar2, die nach der Tarifumschaltung verwendet werden. Dies bedeutet, daß die Dienstevermittlungseinheit MSSP zunächst eine Nachricht CON (Connect) mit den ersten Parametern epar1 zum Kommunikationsendgerät MS sendet (14), die während der bereits bestehenden Verbindung aus den eintreffenden Gebührenparametern die Anruf gebühr - z.B. fortlaufend - nach bekannter Art und Weise ermittelt und gegebenenfalls anzeigt. Stellt die Dienstevermittlungseinheit MSSP eine Tarifumschaltung fest, kann sie sofort eine weitere Nachricht PROC (Proceed) zur Fortsetzung der Gebührenberechnung an das Kommunikationsendgerät MS senden, wobei in der Nachricht PROC nun die zweiten Parameter epar2 enthalten sind (15).

Stellt im Gegensatz dazu die Dienstesteuerungseinheit SCP eine Tarifumschaltung fest, sendet sie weitere Gebührenparameter epar* zur Berechnung der Anrufgebühren in einer erneuten Nachricht tc-con der Dienstevermittlungseinheit MSSP zur Verfügung (16). Die Dienstevermittlungseinheit MSSP ihrerseits initiiert wiederum die Nachricht PROC zur Fortsetzung der Gebührenberechnung, sendet jedoch in ihr die neuen Parameter epar* an das Kommunikationsendgerät MS (17). Das Beispiel macht deutlich, daß Gebührenparameter - aber auch andere Daten - beliebig oft und insbesondere auch während der bereits aufgebauten Verbindung von der Dienstesteuerungseinheit SCP mittels einer getriggerten Anforderung abgerufen werden können.

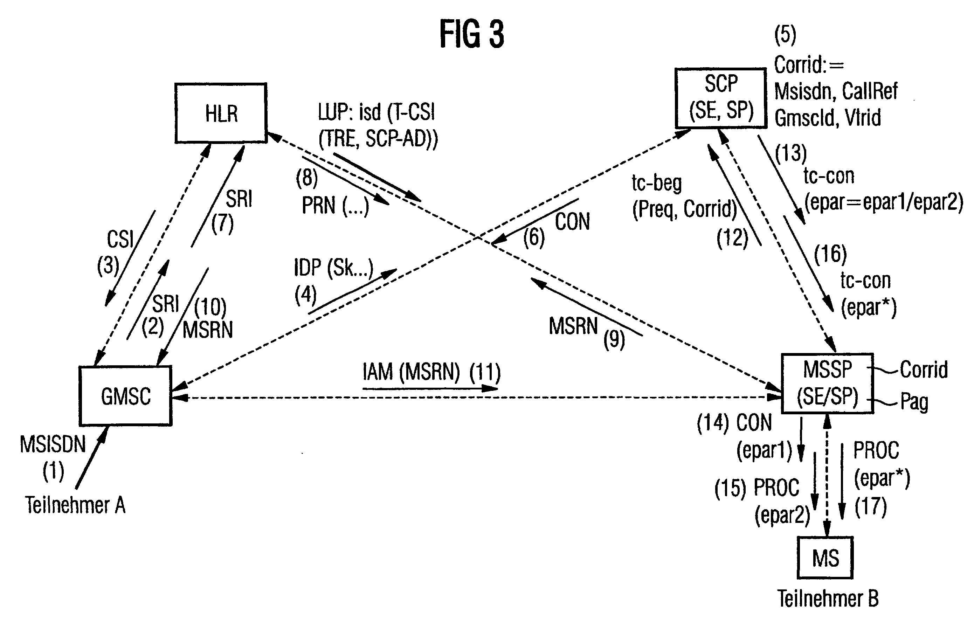

FIG 3 zeigt die Informationsübertragung gemäß der Erfindung für den Fall, daß die Triggerinformation nicht über die übliche zweistufige Anfrage gemäß FIG 2, sondern direkt über die "location update"-Prozedur in die Dienstevermittlungseinheit MSSP implementiert wird. Dazu generiert das für die Aktualisierung zuständige Heimatregister HLR eine Nachricht LUP (Location Update) mit einer Aufforderung isd (insert subscriber data), die signalisiert, daß Daten in der Dienstevermittlungseinheit MSSP - entweder im Besucherregister der Vermittlungseinrichtung oder in der Speichereinrichtung SP - zu ändern oder einzutragen sind. Zusammen mit der Aufforderung isd wird die gemäß der Erfindung benutzte Triggerinformation T-CSI - einschließlich des Triggerereignisses TRE und der Adresse SCP-AD - von dem Heimatregister HLR an die Dienstevermittlungseinheit MSSP übersandt. Damit ist die Triggerung der Anforderung von Informationen in der Dienstevermittlungseinheit MSSP eingestellt.

Der Ablauf des Verbindungsaufbaus gleicht dem von FIG 2 mit dem Unterschied, daß in dem oben zu FIG 2 beschriebenen Schritt (3) keine Triggerinformation, sondern eine allgemeine Information CSI über einen von der Dienstesteuerungseinheit SCP gesteuerten Dienst vom Heimatregister HLR bereitgestellt wird. Es folgt die bekannte zweistufige Anfrage zur Übermittlung der Mobilitätsnummer MSRN, wobei die Nachrichten CON und PRN in den Schritten (6) und (9) in üblicher Art und Weise ohne die Triggerinformation bzw. ohne den Indikator gemäß FIG 2 übertragen werden. Die Schritte (10) bis (17) sind identisch mit dem zu FIG 2 beschriebenen Nachrichtenfluß, sodaß bei Eintritt des gespeicherten Triggerereignisses TRE in der Dienstevermittlungseinheit MSSP eine Informationsübertragung jeweils mit der Anforderung tc-beg gestartet und die angeforderten Informationen - im vorliegenden Beispiel die Vergebührungsparameter epar1, epar2 und epar* - in der jeweiligen Nachricht tc-con von der Dienstesteuerungseinheit SCP geliefert werden. Dabei besteht die Möglichkeit, die Daten und Parameter entweder von der Dienstevermittlungseinheit MSSP vor der Weiterleitung an das Kommunikationsendgerät MS bearbeiten zu lassen oder transparent direkt durchzuschleifen.

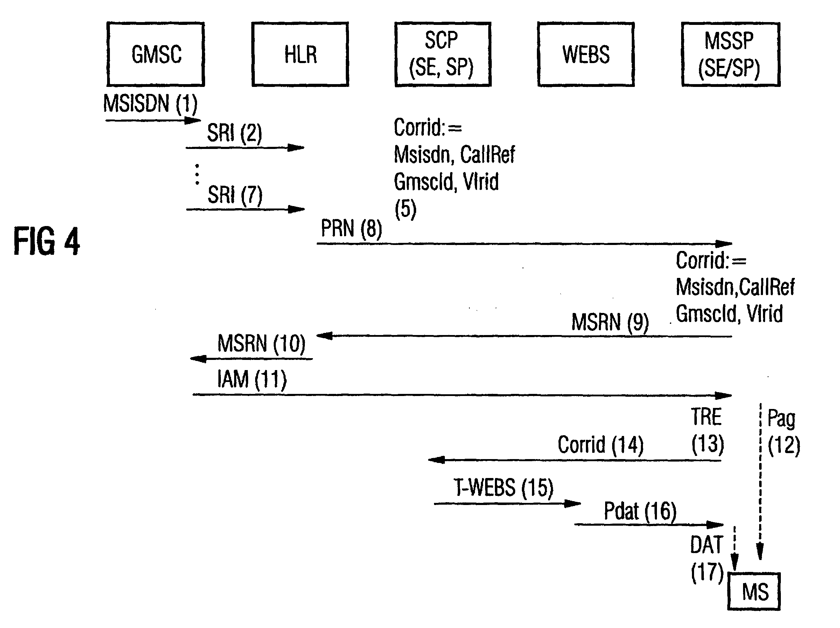

FIG 4 zeigt den Nachrichtenfluß zur Informationsübertragung gemäß der Erfindung für eine besondere Anwendung, bei der Informationen via Dienstesteuerungseinheit SCP von einer Internet-Diensteeinheit WEBS (Web-Server) angefordert werden können. Der Nachrichtenfluß zwischen der Vermittlungseinrichtung GMSC, dem Heimatregister HLR, der Dienstesteuerungseinheit SCP und der Dienstevermittlungseinheit MSSP entspricht dem in FIG 2 oder FIG 3 von Schritt (1) - Empfang der Mobilteilnehmerrufnummer MSISDN - bis Schritt (11) - Senden der Verbindungsaufbaunachricht IAM. Dies beinhaltet die zweistufige Anfrage SRI in den Schritten (2) bis (7) - einschließlich der Erzeugung und Speicherung der Korrelationsinformation CorrId in Dienstesteuerungseinheit SCP und Dienstevermittlungseinheit MSSP - , sowie das Anfordern und Übertragen der Mobilitätsnummer MSRN in den Schritten (8), (9) und (10). Anhand der empfangenen Mobilitätsnummer MSRN sendet die Dienstevermittlungseinheit MSSP bzw. die den Teilnehmer B bedienende Vermittlungseinrichtung den Funkruf pag aus, um eine Verbindung mit dem Kommunikationsendgerät MS herzustellen.

Die Triggerung der Anforderung zur Übermittlung der Informationen gemäß der Erfindung kann entweder über das Verfahren gemäß FIG 2 mit der zweistufigen Anfrage (relay indication) oder über das Verfahren gemäß FIG 3 mit der direkten "location update"-Prozedur erreicht werden. Unabhängig vom gewählten Verfahren initiiert die Dienstevermittlungseinheit MSSP, sobald das voreingestellte Triggerereignis TRE erfüllt ist (13), eine Nachrichtenübertragung zur Dienstesteuerungseinheit SCP. Dabei sendet sie die Korrelationsinformation CorrId (14), anhand der die von der Internet-Diensteeinheit WEBS direkt angeforderten Informationen dem jeweiligen Anruf zugeordnet werden. Die Dienstesteuerungseinheit SCP triggert daraufhin die Internet-Diensteeinheit WEBS, indem sie ihr eine Nachricht T-WEBS zur Übermittlung von Informationen zustellt (15). Danach sendet die Internet-Diensteeinheit WEBS eine Nachricht Pdat mit Informationen zur Dienstevermittlungseinheit MSSP (16), die die Informationen DAT direkt oder nach einer Bearbeitung oder Aufbereitung zum Kommunikationsendgerät MS weiterleitet (17). Alternativ zu der obigen Vorgehensweise kann die Internet-Diensteeinheit WEBS auch unmittelbar von der Dienstevermittlungseinheit MSSP zur Übermittlung der Informationen DAT adressiert werden. Beispiel für die durch Triggerung abrufbaren Informationen sind im Internet gespeicherte eMails, Werbung usw..

## Patentansprüche

1. Verfahren zur Anforderung von **Verbindungs**-Informationen bei ankommenden Anrufen **während und nach dem Verbindungsaufbau**, die an einen Teilnehmer (B) eines Kommunikationsnetzes gerichtet sind, das aufweist
- vernetzte Vermittlungseinrichtungen (GMSC, MSC), an die über weitere Einrichtungen (BS) den Zugang von Teilnehmern ermöglichende Kommunikationsendgeräte (MS) anschließbar sind und/oder über die Übergänge zu mindestens einem weiteren Netz (PSTN) bewirkt werden können,
- zumindest eine Teilnehmerdatenbasis (HLR) zur Speicherung von Daten der im Kommunikationsnetz registrierten Teilnehmer,
- zumindest eine Dienstevermittlungseinheit (MSSP) und eine Dienstesteuerungseinheit (SCP) zur Administrierung von Diensten,
**dadurch gekennzeichnet, dass**
- von der Teilnehmerdatenbasis (HLR) **während einer Verbindungsaufbau-Prozedur eine Informations-Anforderungs**-Triggerinformation (T-CSI) zu der für den Teilnehmer aktuell zuständigen Dienstevermittlungseinheit (MSSP) gesendet, und
- mit ihr ein **Informations-Anforderungs**-Triggerereignis (TRE) in der Dienstevermittlungseinheit (MSSP) gespeichert wird, und
- bei Vorliegen des **Informations-Anforderungs**-Triggerereignisses (TRE) die Informationen von einer Dienstesteuerungseinheit (SCP) durch die Dienstevermittlungseinheit (MSSP) direkt angefordert werden.

2. Verfahren nach Anspruch 1, bei dem Daten und/oder Parameter (epar, epar*) von der Dienstesteuerungseinheit (SCP) übermittelt und via die Dienstevermittlungseinheit (MSSP) zum Kommunikationsendgerät (MS) gesendet werden.

3. Verfahren nach Anspruch 2, bei dem die Daten und/oder Parameter (epar, epar*) von der Dienstevermittlungseinheit (MSSP) zum Kommunikationsendgerät (MS) transparent weitergeleitet werden.

4. Verfahren nach Anspruch 2, bei dem die Daten und/oder Parameter (epar, epar*) von der Dienstevermittlungseinheit (MSSP) bearbeitet und danach zum Kommunikationsendgerät (MS) weitergeleitet werden.

5. Verfahren nach einem der vorhergehenden Ansprüche, bei dem mit der Informations-Anforderungs-Triggerinformation (T-CSI) eine Adresse (SCP-AD) der Dienstesteuerungseinheit (SCP), von der die Informationen anzufordern sind, in der Dienstevermittlungseinheit (MSSP) gespeichert wird.

6. Verfahren nach einem der vorhergehenden Ansprüche, bei dem
- die Informations-Anforderungs-Triggerinformation (T-CSI) auf Grund einer Anfrage (SRI) der Vermittlungseinrichtung (GMSC), die den ankommenden Anruf empfängt, von der Teilnehmerdatenbasis (HLR) übersandt wird,
- ein Indikator (reqP) für die direkt anzufordernden Informationen auf Grund einer initiierenden Nachricht (IDP) der Vermittlungseinrichtung (GMSC) von der Dienstesteuerungseinheit (SCP) übersandt wird, und
- die Informations-Anforderungs-Triggerinformation (T-CSI) zusammen mit dem Indikator (reqP) von der Vermittlungseinrichtung (GMSC) via Teilnehmerdatenbasis (HLR) in einer Anforderung (PRN) zur Übermittlung einer den Aufenthaltsort des Teilnehmers kennzeichnenden Mobilitätsnummer (MSRN) zur Dienstevermittlungseinheit (MSSP) gesendet wird.

7. Verfahren nach einem der Ansprüche 1 bis 5, bei dem die Informations-Anforderungs-Triggerinformation (T-CSI) von der Teilnehmerdatenbasis (HLR) in einer Nachricht (LUP), die zur Aktualisierung des Aufenthaltsorts des Teilnehmers an die Dienstevermittlungseinheit (MSSP) benutzt wird, gesendet wird.

8. Verfahren nach einem der vorhergehenden Ansprüche, bei dem von der Dienstesteuerungseinheit (SCP) sowie der Dienstevermittlungseinheit (MSSP) eine Korrelationsinformation (CorrId) benutzt wird, anhand der die von der Dienstesteuerungseinheit (SCP) direkt angeforderten Informationen dem jeweiligen Anruf zugeordnet werden.

9. Verfahren nach einem der vorhergehenden Ansprüche, bei dem zur Berechnung der Anrufgebühren von der Dienstesteuerungseinheit (SCP) ein Satz von mehreren Parametern (eparl/ epar2) übersandt wird, von denen erste Parameter (epar1) vor einer durch die Dienstevermittlungseinheit (MSSP) ermittelten Tarifumschaltung und zweite Parameter (epar2) nach der Tarifumschaltung verwendet werden.

10. Verfahren nach Anspruch 9, bei dem nach einer von der Dienstesteuerungseinheit (SCP) ermittelten Tarifumschaltung weitere Parameter (epar*) zur Berechnung der Anrufgebühren von der Dienstesteuerungseinheit (SCP) übersandt werden.

11. Verfahren nach einem der vorhergehenden Ansprüche, bei dem die Dienstevermittlungseinheit (MSSP) bei erfülltem Informations-Anforderungs-Triggerereignis (TRE) Informationen (DAT) von einer Internet-Diensteeinheit (WEBS) anfordert, empfängt und an das Kommunikationsendgerät (MS) sendet.

12. Verfahren nach Anspruch 11, bei dem von der Dienstevermittlungseinheit (MSSP) eine Korrelationsinformation (CorrId) zur Dienstesteuerungseinheit (SCP) gesendet wird, mit der von der Internet-Diensteeinheit (WEBS) die Informationen angefordert und dem jeweiligen Anruf zugeordnet werden.

13. Dienstevermittlungseinheit (MSSP) zur Anforderung von Informationen bei ankommenden an einen Teilnehmer (B) gerichteten Anrufen in einem Kommunikationsnetz, das aufweist
- vernetzte Vermittlungseinrichtungen (GMSC, MSC), an die über weitere Einrichtungen (BS) den Zugang von Teilnehmern ermöglichende Kommunikationsendgeräte (MS) anschließbar sind und/oder über die Übergänge zu mindestens einem weiteren Netz (PSTN) bewirkt werden können,
- zumindest eine Teilnehmerdatenbasis (HLR) zur Speicherung von Daten der im Kommunikationsnetz registrierten Teilnehmer,
- zumindest eine Dienstevermittlungseinheit (MSSP) und eine Dienstesteuerungseinheit (SCP) zur Administrierung von Diensten,
**dadurch gekennzeichnet, dass** die Dienstevermittlungseinheit (MSSP) die folgenden Einrichtungen aufweist:
- eine Speichereinrichtung (SP) zum Speichern eines Informations-Anforderungs-Triggerereignisses (TRE) auf Grund einer von der Teilnehmerdatenbasis (HLR) übersandten Informations-Anforderungs-Triggerinformation (T-CSI), und
- eine Steuereinrichtung (SE) zum Erzeugen einer Nachricht (tc-beg), die bei Vorliegen des Informations-Anforderungs-Triggerereignisses (TRE) zur Anforderung von Informationen direkt an die Dienstesteuerungseinheit (SCP) gesendet wird.

14. Dienstevermittlungseinheit (MSSP) nach Anspruch 13, mit der Speichereinrichtung (SP), die von der Dienstesteuerungseinheit (SCP) übermittelte Daten und/oder Parameter (epar, epar*) speichert, und der Steuereinrichtung (SE), die das Senden der Daten und/oder Parameter (epar, epar*) zum Kommunikationsendgerät (MS) veranlaßt.

15. Dienstevermittlungseinheit (MSSP) nach Anspruch 13 oder 14, mit der Speichereinrichtung (SP), die mit der Informations-Anforderungs-Triggerinformation (T-CSI) eine Adresse (SCP-AD) der Dienstesteuerungseinheit (SCP), von der die Informationen anzufordern sind, speichert.

16. Dienstevermittlungseinheit (MSSP) nach einem der Ansprüche 13 bis 15, mit der Steuereinrichtung (SE), die in einer Anforderung (SRI, PRN) zur Übermittlung einer den Aufenthaltsort des Teilnehmers kennzeichnenden Mobilitätsnummer (MSRN) die Informations-Anforderungs-Triggerinformation (T-CSI) zusammen mit einem Indikator (reqP) für die direkt anzufordernden Informationen empfängt, und mit der Speichereinrichtung (SP), die die Informations-Anforderungs-Triggerinformation (T-CSI) zusammen mit dem Indikator (reqP) speichert.

17. Dienstevermittlungseinheit (MSSP) nach einem der Ansprüche 13 bis 15, mit der Steuereinrichtung (SE), die die Informations-Anforderungs-Triggerinformation (T-CSI) von der Teilnehmerdatenbasis (HLR) in einer Nachricht (LUP), die zur Aktualisierung des Aufenthaltsorts des Teilnehmers vorgesehen ist, empfängt.

## Claims

1. Method for requesting connection information during incoming calls, during and after the setting up of a connection, to a subscriber (B) in a communications network which has
- networked switching devices (GMSC, MSC) to which communications terminals (MS) which allow access by subscribers can be connected via further devices (BS) and/or can be brought about via the hand over to at least one further network (PSTN),
- at least one subscriber database (HLR) for storing data relating to the subscribers registered in the communications network,
- at least one service switching point (MSSP) and one service control point (SCP) for administering services,
**characterized in that**
- information-request trigger information (T-CSI) is sent from the subscriber database (HLR) during a connection setting-up procedure to the service switching point (MSSP) which is currently responsible for the subscriber, and
- an information-request trigger event (TRE) is then stored with it in the service switching point (MSSP), and
- when the information-request trigger event (TRE) is present, the information is requested directly from a service control point (SCP) by the service switching point (MSSP).

2. Method according to Claim 1, in which data and/or parameters (epar, epar*) are transmitted from the service control point (SCP) and are sent via the service switching point (MSSP) to the communications terminal (MS).

3. Method according to Claim 2, in which the data and/or parameters (epar, epar*) are passed on transparently from the service switching point (MSSP) to the communications terminal (MS).

4. Method according to Claim 2, in which the data and/or parameters (epar, epar*) are processed by the service switching point (MSSP) and are then passed on to the communications terminal (MS).

5. Method according to one of the preceding claims, in which an address (SCP-AD) of the service control point (SCP) from which the information can be requested is stored with the information-request trigger information (T-CSI) in the service switching point (MSSP).

6. Method according to one of the preceding claims, in which
- the information-request trigger information (T-CSI) is sent from the subscriber database (HLR) on the basis of a request (SRI) from the switching device (GMSC) which receives the incoming call,
- an indicator (reqP) for the information which can be requested directly is sent from the service control point (SCP) on the basis of an initiating message (IDP) from the switching device (GMSC), and
- the information-request trigger information (T-CSI) is sent together with the indicator (reqP) from the switching device (GMSC) via the subscriber database (HLR) to the service switching point (MSSP), in a request (PRN) for transmission of a mobile subscriber roaming number (MSRN), which identifies the location of the subscriber.

7. Method according to one of Claims 1-5, in which the information-request trigger information (T-CSI) is sent from the subscriber database (HLR) to the service switching point (MSSP) in a message (LUP) which is used for updating the location of the subscriber.

8. Method according to one of the preceding claims, in which correlation information (CorrId) is used by the service control point (SCP) and by the service switching point (MSSP), on the basis of which the information requested directly from the service control point (SCP) is associated with the respective call.

9. Method according to one of the preceding claims, in which a set of a plurality of parameters (epar1/epar2) is sent from the service control point (SCP) in order to calculate the call charges, of which first parameters (epar1) are used before any tariff switching determined by the service switching point (MSSP) and second parameters (epar2) are used after the tariff switching.

10. Method according to Claim 9, in which after any tariff switching determined by the service control point (SCP), further parameters (epar*) are sent from the service control point (SCP) in order to calculate the call charges.

11. Method according to one of the preceding claims, in which, when an information-request trigger event (TRE) is satisfied, the service switching point (MSSP) requests, receives and sends to the communications terminal (MS) information (DAT) from an Internet service unit (WEBS).

12. Method according to Claim 11, in which correlation information (CorrId) is sent from the service switching point (MSSP) to the service control point (SCP) by means of which the Internet service unit (WEBS) requests the information and associates it with the respective call.

13. Service switching point (MSSP) for requesting information during incoming calls to a subscriber (B) in a communications network which has
- networked switching devices (GMSC, MSC) to which communications terminals (MS) which allow access by subscribers can be connected via further devices (BS) and/or can be brought about via the hand over to at least one further network (PSTN),
- at least one subscriber database (HLR) for storing data relating to the subscribers registered in the communications network,
- at least one service switching point (MSSP) and one service control point (SCP) for administering services,
**characterized in that** the service switching point (MSSP) has the following devices:
- a memory device (SP) for storing an information-request trigger event (TRE) on the basis of information-request trigger information (T-CSI) sent from the subscriber database (HLR), and
- a control device (SE) for producing a message (tc-beg) which is sent directly to the service control point (SCP) when the information-request trigger event (TRE) for requesting information is present.

14. Service switching point (MSSP) according to Claim 13, having the memory device (SP) which stores data and/or parameters (epar, epar*) transmitted from the service control point (SCP), and having the control device (SE)- which initiates the sending of the data and/or parameters (epar, epar*) to the communications terminal (MS).

15. Service switching point (MSSP) according to Claim 13 or 14, having the memory device (SP) which stores an address (SCP-AD) of the service control point (SCP) from which the information can be requested, with the information-request trigger information (T-CSI).

16. Service switching point (MSSP) according to one of Claims 13 to 15, having the control device (SE) which receives the information-request trigger information (T-CSI) together with an indicator (reqP) for the information which can be directly requested, in a request (SRI, PRN) to transmit a mobile subscriber roaming number (MSRN) which identifies the location of the subscriber, and having the memory device (SP) which stores the information-request trigger information (T-CSI) together with the indicator (reqP).

17. Service switching point (MSSP) according to one of Claims 13 to 15, having the control device (SE) which receives the information-request trigger information (T-CSI) from the subscriber database (HLR) in a message (LUP) which is provided for updating the location of the subscriber.

## Revendications

1. Procédé pour la demande d'informations de liaison lors d'appels arrivants, pendant et après l'établissement de liaison, lesquels appels sont adressés à un abonné (B) d'un réseau de communication comportant :
- des dispositifs commutateurs (GMSC, MSC) en réseau auxquels peuvent être raccordés des terminaux de communication (MS) permettant l'accès d'abonnés par l'intermédiaire d'autres dispositifs (BS) et/ou par l'intermédiaire desquels peuvent être établies des passerelles vers au moins un autre réseau (PSTN),
- au moins une base de données d'abonnés (HLR) pour la mémorisation de données des abonnés enregistrés dans le réseau de communication,
- au moins une unité de fourniture de service (MSSP) et une unité de commande de service (SCP) pour la gestion de services,
**caractérisé par le fait que**
- pendant une procédure d'établissement de liaison, une information de déclenchement de demande d'informations (T-CSI) est envoyée par la base de données d'abonnés (HLR) à l'unité de fourniture de service (MSSP) actuellement compétente pour l'abonné, et
- avec elle, un événement de déclenchement de demande d'informations (TRE) est mémorisé dans l'unité de fourniture de service (MSSP), et
- en présence de l'événement de déclenchement de demande d'informations (TRE), les informations sont demandées à une unité de commande de service (SCP) directement via l'unité de fourniture de service (MSSP).

2. Procédé selon la revendication 1, dans lequel des données et/ou des paramètres (epar, epar*) sont transmis par l'unité de commande de service (SCP) et sont envoyés via l'unité de fourniture de service (MSSP) au terminal de communication (MS).

3. Procédé selon la revendication 2, dans lequel les données et/ou les paramètres (epar, epar*) sont retransmis de manière transparente par l'unité de foumiture de service (MSSP) au terminal de communication (MS).

4. Procédé selon la revendication 2, dans lequel les données et/ou les paramètres (epar, epar*) sont traités par l'unité de fourniture de service (MSSP) puis sont retransmis au terminal de communication (MS).

5. Procédé selon l'une des revendications précédentes, dans lequel, avec l'information de déclenchement de demande d'informations (T-CSI), il est mémorisé une adresse (SCP-AD) de l'unité de commande de service (SCP), à laquelle les informations sont à demander, dans l'unité de fourniture de service (MSSP).

6. Procédé selon l'une des revendications précédentes, dans lequel
- en raison d'une interrogation (SRI) du dispositif commutateur (GMSC) qui reçoit l'appel arrivant, l'information de déclenchement de demande d'informations (T-CSI) est envoyée par la base de données d'abonnés (HLR),
- en raison d'un message déclencheur (IDP) du dispositif commutateur (GMSC), un indicateur (reqP) pour les informations à demander directement est envoyé par l'unité de commande de service (SCP), et
- l'information de déclenchement de demande d'informations (T-CSI) est envoyée conjointement à l'indicateur (reqP) par le dispositif commutateur (GMSC) via la base de données d'abonnés (HLR) dans une demande (PRN) pour la transmission d'un numéro de mobilité (MSRN), caractérisant le lieu de séjour de l'abonné, vers l'unité de fourniture de service (MSSP).

7. Procédé selon l'une des revendications 1 à 5, dans lequel l'information de déclenchement de demande d'informations (T-CSI) est envoyée par la base de données d'abonnés (HLR) dans un message (LUP) qui est utilisé pour l'actualisation du lieu de séjour de l'abonné au niveau de l'unité de fourniture de service (MSSP).

8. Procédé selon l'une des revendications précédentes, dans lequel l'unité de commande de service (SCP) et l'unité de fourniture de service (MSSP) utilisent une information de corrélation (Corrld) à l'aide de laquelle les informations demandées directement à l'unité de commande de service (SCP) sont associées à l'appel respectif.

9. Procédé selon l'une des revendications précédentes, dans lequel, pour le calcul des frais d'appel, l'unité de commande de service (SCP) envoie un ensemble de plusieurs paramètres (epar1 / epar2) dont des premiers paramètres (epar1) sont utilisés avant une commutation de tarif déterminée par l'unité de fourniture de service (MSSP) et dont des deuxièmes paramètres (epar2) sont utilisés après la commutation de tarif.

10. Procédé selon la revendication 9, dans lequel, après une commutation de tarif déterminée par l'unité de commande de service (SCP), d'autres paramètres (epar*) pour le calcul des frais d'appel sont envoyés par l'unité de commande de service (SCP).

11. Procédé selon l'une des revendications précédentes, dans lequel, en présence d'un événement de déclenchement de demande d'informations (TRE), l'unité de fourniture de service (MSSP) demande des informations (DAT) à une unité de service Internet (WEBS), les reçoit et les transmet au terminal de communication (MS).

12. Procédé selon la revendication 11, dans lequel l'unité de fourniture de service (MSSP) envoie à l'unité de commande de service (SCP) une information de corrélation (Corrld) avec laquelle les informations sont demandées à l'unité de service Internet (WEBS) et sont associées à l'appel respectif.

13. Unité de fourniture de service (MSSP) pour la demande d'informations lors d'appels arrivants adressés à un abonné (B) dans un réseau de communication comportant
- des dispositifs commutateurs (GMSC, MSC) en réseau auxquels peuvent être raccordés des terminaux de communication (MS) permettant l'accès d'abonnés par l'intermédiaire d'autres dispositifs (BS) et/ou par l'intermédiaire desquels peuvent être établies des passerelles vers au moins un autre réseau (PSTN),
- au moins une base de données d'abonnés (HLR) pour la mémorisation de données des abonnés enregistrés dans le réseau de communication,
- au moins une unité de fourniture de service (MSSP) et une unité de commande de service (SCP) pour la gestion de services,
**caractérisée par le fait que** l'unité de fourniture de service (MSSP) comporte les dispositifs suivants :
- un dispositif de mémoire (SP) pour mémoriser un événement de déclenchement de demande d'informations (TRE) en raison d'une information de déclenchement de demande d'informations (T-CSI) envoyée par la base de données d'abonnés (HLR), et
- un dispositif de commande (SE) pour produire un message (tc-beg) qui, en présence de l'événement de déclenchement de demande d'informations (TRE) pour la demande d'informations, est envoyé directement à l'unité de commande de service (SCP).

14. Unité de fourniture de service (MSSP) selon la revendication 13, avec le dispositif de mémoire (SP), qui mémorise les données et/ou paramètres (epar, epar*) transmis par l'unité de commande de service (SCP), et avec le dispositif de commande (SE), qui provoque l'envoi des données et/ou paramètres (epar, epar*) au terminal de communication (MS).

15. Unité de fourniture de service (MSSP) selon la revendication 13 ou 14, avec le dispositif de mémoire (SP) qui mémorise avec l'information de déclenchement de demande d'informations (T-CSI) une adresse (SCP-AD) de l'unité de commande de service (SCP) à laquelle les informations sont à demander.

16. Unité de fourniture de service (MSSP) selon l'une des revendications 13 à 15, avec le dispositif de commande (SE) qui reçoit dans une demande (SRI, PRN) pour la transmission d'un numéro de mobilité (MSRN), caractérisant le lieu de séjour de l'abonné, l'information de déclenchement de demande d'informations (T-CSI) conjointement à un indicateur (reqP) pour les informations à demander directement et avec le dispositif de mémoire (SP) qui mémorise l'information de déclenchement de demande d'informations (T-CSI) conjointement à l'indicateur (reqP).

17. Unité de fourniture de service (MSSP) selon l'une des revendications 13 à 15, avec le dispositif de commande (SE) qui reçoit l'information de déclenchement de demande d'informations (T-CSI) de la base de données d'abonnés (HLR) dans un message (LUP) qui est prévu pour l'actualisation du lieu de séjour de l'abonné.
